# EUROPEAN PATENT APPLICATION

(11) **EP 1 995 050 A1**
(43) Date of publication of application: **26.11.2008**
(21) Application number: 07380146.6
(22) Date of filing: 24.05.2007
(51) Int. Cl.: B30B 15/14, H02J 3/30, B30B 15/16

(54) **Electrical energy supply system for presses**

(71) Applicant: FAGOR, S.COOP., 20500 Mondragon (Gipuzkoa) (ES)
(72) Inventor: Suinaga Landa, Yon, 20570 Bergara (Gipuzkoa) (ES); Chico Garcia David, 01012 Vitoria-Gasteiz (Araba) (ES)
(74) Representative: Igartua, Ismael

(57) **Abstract**

Electrical power supply system for a press, the press comprising (2) a movable slide (20) and a main shaft (21) for transmitting the movement to the slide (20). The system comprises a main motor (101) that may be supplied by a main supply (3) for transmitting its energy to the shaft (21) to move the slide (20), and a pack (100) comprising an auxiliary motor (10) that may be supplied by the main supply (3) and a flywheel (11) connected to the auxiliary motor (10), so that the auxiliary motor (10) may store its energy in the flywheel (11) in the form of kinetic energy, said kinetic energy being transmitted to said shaft (21). Said pack (100) comprises generator means (12) to convert the kinetic energy into electrical energy, said generator means (12) supplying said main motor (101) with said electrical energy.

## Description

### TECHNICAL FIELD

The present invention relates to electrical energy supply systems for presses, and more specifically for servo-presses.

### PRIOR ART

Conventional mechanical presses comprise a motor connected to the main supply and whose function is to move a flywheel that stores the energy provided by the motor in the form of kinetic energy. This energy is transmitted to the press by means of a clutch connection in order to cause the movement of the press slide, being connected by means of the clutch to a main shaft that transmits the movement to the slide. Thus, when the energy needs to be transmitted to, the clutch it is connected to the main shaft, being released when the energy does not need to be transmitted.

This type of presses cannot provide quick movements or changes of trajectory due to the inertia of the flywheel, which derives in a problem regarding a lack of flexibility. There are known types of presses, servo-presses, in which this problem is avoided as in said presses the motor is directly connected to the main shaft of the press thereby directly transmitting the movement to the slide, without any need for the flywheel and the clutch used in conventional mechanical presses. The energy required by said type of presses is obtained directly from the motor, which necessitates the use of a high-power motor and results in spikes in energy consumption which in turn cause high spikes in the demand for energy in the main supply (such as in the step where the material for pressing is deformed), which requires having main supply power points of high-power in order to supply said motor and, as a result, said press.

The document JP2004136336, for example, discloses a press that reduces the problem of the need for main supply power points of high-power, while maintaining as far as possible the aforementioned flexibility offered by servo-presses. Said document discloses a supply system that comprises a motor (hydraulic) that is connected directly to the main shaft of the press in order to move the slide, and a second motor whose energy can be stored in a flywheel in the form of kinetic energy, said flywheel being connected to the main shaft by means of a clutch so that said kinetic energy can be transmitted to it, thereby allowing it to cause the movement of the slide. Thus, in the pressing steps in which there is a high demand for energy, the flywheel is connected to said main shaft, said wheel providing the required energy while avoiding high energy demand spikes in the main supply, and, therefore, preventing the need of main supply power points of high-power, whereas in the steps in which there is a reduced demand for energy it is the second motor that can be connected directly to said main shaft in order to supply it, making said steps flexible. Both the second motor and the flywheel are connected to the press by means of clutches, said clutches being connected or released from said press when the supply for the corresponding motor/wheel is required.

### BRIEF DISCLOSURE OF THE INVENTION

It is an object of this invention to provide an electrical energy supply system for presses, so that the value of the spikes in the energy demand on the general main supply can be reduced and to also give the press flexibility.

The supply system of the invention is used in presses that comprise a main slide that may move upwards and downwards and a main shaft whose function is to transmit the movement to the slide. Said system comprises a main motor that is supplied by the general main supply and which may transmit its energy to the main shaft in order to move the slide, and a power pack which also comprises an auxiliary motor that is supplied by the main supply and a flywheel connected to the auxiliary motor, so that the auxiliary motor can store its energy in the flywheel in the form of kinetic energy, said kinetic energy being capable of being transmitted to said main shaft to move said slide.

The system power pack also comprises generator means that can convert the kinetic energy stored in the flywheel into electrical energy, the main motor capable of being supplied by said electrical energy so that said main motor may be supplied by the main supply and/or the pack. Said main motor is connected to the main shaft of the press, said main shaft receiving, therefore, the energy directly causing the movement of the slide only from said main motor.

In this way, when the main motor requires an increased amount of energy, said main motor may also be supplied by the power pack (by the generator means) or only by said pack, thereby preventing increased consumption caused by energy spikes on the main supply. Thus, by requiring less energy from the main supply, the main supply power points necessary with the supply system of the invention requires less power than that used in a conventional servo-press, thereby maintaining the same flexibility offered by said servo-press.

These and other advantages and characteristics of the invention will be made evident in the light of the drawings and the detailed description thereof.

### DESCRIPTION OF THE DRAWINGS

FIG. 1 schematically shows a first embodiment of the supply system of the invention, supplying a single press.
FIG. 2 schematically shows a second embodiment of the supply system of the invention, supplying a single press.
FIG. 3 schematically shows an embodiment of the switching means of the system of FIG. 1 or FIG. 2.
FIG. 4 schematically shows the supply system of FIG. 1, supplying a plurality of presses.

### DETAILED DISCLOSURE OF THE INVENTION

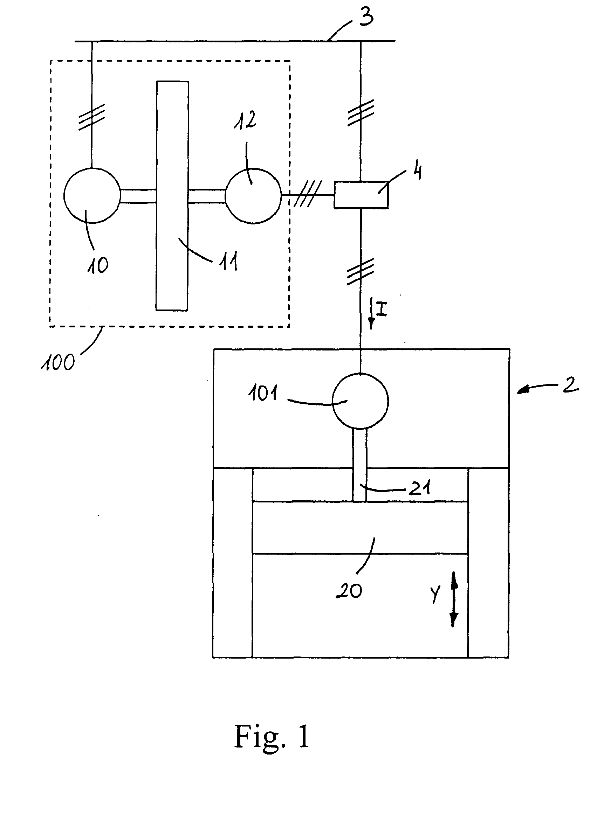

Figure 1 shows a first embodiment of the electrical energy supply system of the invention, which is used for supplying electricity to presses 2.

The presses 2 comprise a slide 20 that is moved in a direction of movement Y, upwards or downwards, during a pressing process in which a material (not shown in the figures) is deformed. By means of the system of the invention said press 2 is provided with the necessary energy to move said slide 20, through a main shaft 21 comprised by the press 2 itself.

The system of the invention comprises a main motor 101 that may be supplied by the general main supply 3 and which may transmit its energy directly to the main shaft 21 so that it causes the movement of the slide 20, and a pack 100 that itself comprises an auxiliary motor 10 that is supplied by the main supply 3, a flywheel 11 that can store the energy of the auxiliary motor 10 in the form of kinetic energy, and generator means 12 for converting said kinetic energy into electrical energy, it being possible by means of said generator means 12 to transmit said electrical energy to said main motor 101 to cause the movement of said slide 20 by means of the main shaft 21, so that said main motor 101 may be supplied by the main supply 3 and/or said pack 100. The main motor 101 may also function as a generator (for example, in the braking steps) and return energy to the main supply 3. Said energy may also be used at the same time by the auxiliary motor 10, so that it can be stored in the flywheel 10 in the form of kinetic energy.

The pack 100 of the system may convert the kinetic energy stored in the flywheel 11 into electrical energy, the main motor 101 capable of being supplied by said electrical energy. Said main motor 101 is connected to the main shaft 21 of the press 2, so that said main shaft 21 receives the necessary energy to cause the movement of the slide 20 only from said main motor 101, said main motor 101 being capable of being supplied by the kinetic energy stored in the flywheel 11 (once it has been converted into electrical energy) and/or by the main supply 3.

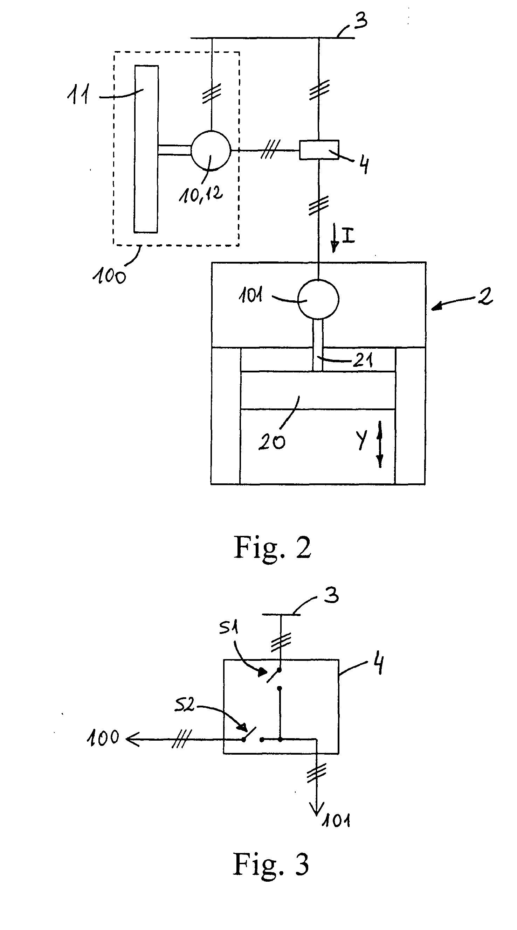

In the first embodiment of the system shown in Figure 1, the generator means 12 of the pack 100 comprise a generator 12 that is connected to the flywheel 11, said generator 12 being the one that transmits the electrical energy originating from the kinetic energy stored in said flywheel 11 to the main motor 101. In a second embodiment of the system shown in Figure 2, said generator means 12 are integrated into the auxiliary motor 10 of said pack 100, said auxiliary motor 10 in said second embodiment being capable of acting as a motor, being supplied by the main supply 3 and its energy being stored in the flywheel 11, or as a generator, the kinetic energy stored in said flywheel 11 being converted into electrical energy which then supplies the main motor 101.

In the pressing steps in which less energy is needed, such as the movement of the slide 20 upwards or downwards without deforming any material, the main motor 101 may be supplied directly by the voltage of the main supply 3, whereas in the steps in which more energy is required and there may be spikes in energy demand on the main supply 3, such as the pressing step in which material is deformed, said main motor 101 may also (or only) be supplied by the power pack 100 (by the generator means 12), thereby avoiding the demand for voltage spikes on said main supply 3. For this reason the system also comprises switching means 4 disposed between the main motor 101 and the pack 100 and the main supply 3, said main motor 101 being capable of being supplied by said pack 100 by means of said switching means 4. Said system also comprises means (not shown in the figures), that may comprise, for example, a current sensor for determining the current I of consumption of the main motor 101, and depending on the value of said current I, said switching means 4 cause said main motor 101 to be supplied by the pack 100 or the main supply 3, or both simultaneously. If said value of the current I is lower than a predetermined value, the switching means 4 cause the main motor 101 to be supplied only by the main supply 3, whereas if it is equal to or higher than said predetermined value (when there is a risk of spikes in energy demand on the main supply 3), said switching means 4 cause said main motor 101 to also be supplied by the pack 100, thereby demanding less energy from the main supply 3, or even only from said pack 100.

Thus, if, for example, a conventional 1600-ton press can require an energy (power) supply of up to 330Kw, a conventional servo-press of the same characteristics would require, for example, around 1000Kw of energy, approximately three times more power than said conventional press (300%). In the system of the invention, to prevent the excessive demand for energy from the main supply 3, a predetermined value lower than the value that may be required by a conventional servo-press is determined (which may be approximately 300% of a conventional press in this case), said predetermined value being able to correspond with the value of the current I of consumption corresponding to an energy (power) ranging between approximately 150% and approximately 200% of the energy of a conventional press. Thus, in requiring less energy from the main supply 3, the main power points necessary to supply a press 2 with the supply system of the invention requires less power than that used for a conventional servo-press, while maintaining the same flexibility that said servo-press offers.

The switching means 4, shown in Figure 3, are adapted to cause the main motor 101 to be supplied by the main supply 3 and the pack 100 simultaneously or only from said pack 100 when it is determined that the current I of consumption is equal to or higher than the predetermined value, or from said main supply 3 when it is determined that the current I of consumption is lower than said predetermined value. To achieve this, said switching means 4 may comprise, for example, a first switch S1 that is shut off so that it can be supplied by said voltage from the main supply 3 and a second switch S2 that is shut off so that it can be supplied by said pack 100. Control means (not shown in the figures) determine whether said current I value is equal to, higher or lower than said predetermined value, causing the corresponding switch S1, S2 to open or close.

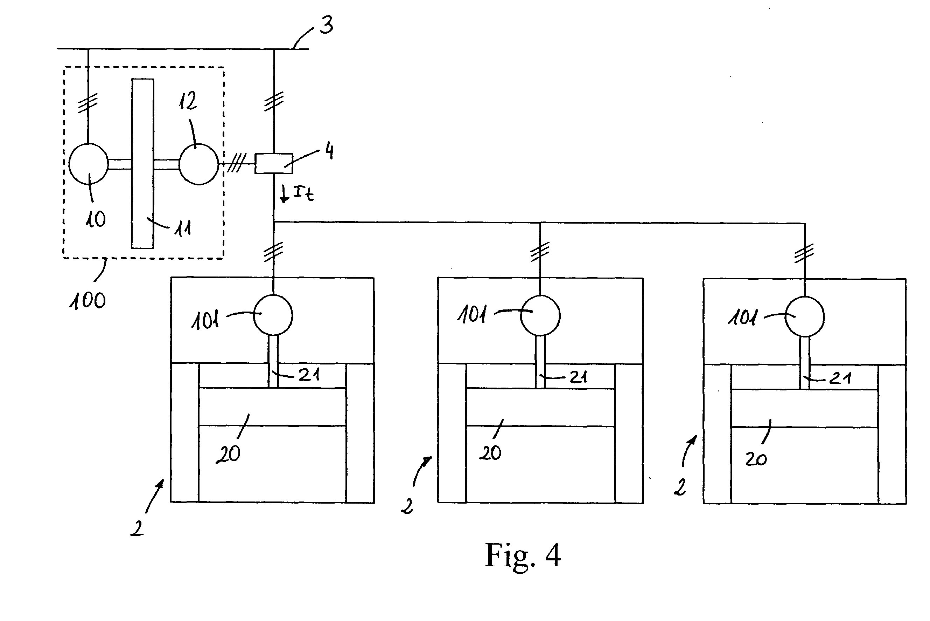

The supply system may be used to supply a single press 2 (figures 1 and 2), or to supply a plurality of presses as shown in Figure 4 (although the generator means 12 may also be integrated into the auxiliary motor 10), each press 2 comprising a main motor 101 connected to its main shaft 21 to enable the corresponding slide 20 to be moved. All the main motors 101 are supplied simultaneously from the main supply 3 and/or the pack 100. The switching means 4 are disposed between the main motors 101 and, the pack 100 and the main supply 3, said main motors 101 being capable of being supplied by said pack 100 and/or by the main supply 3 by means of said switching means 4.

When the system of the invention is used to supply a plurality of presses 2, said system comprises means (not shown in the figures), that may comprise, for example, at least one current sensor, to detect the total current It consumed by all the main motors 101 simultaneously (or they may comprise, for example, a current sensor for each main motor 101, and second control means (not shown in the figures) may add together all the currents detected by the different current sensors, the total current It being obtained as a result of said sum). When it is determined that the value of said current It is equal to or higher than a second predetermined value, said switching means 4 cause said main motors 101 to be supplied by the main supply 3 and/or by the pack 100, causing them to be supplied by said main supply 3 when it is determined that the value of said total current It is lower than said second predetermined value.

Thus, if, for example, a conventional 1600-ton press can require an energy (power) supply of 330Kw, a conventional servo-press of the same characteristics would need, for example, around 1000Kw of energy, approximately three times more power than said conventional press (300%). The consumption that three conventional presses may require, for example, is, therefore, 990Kw, whereas that of three servo-presses is 3000Kw. To avoid the excessive demand for energy from the main supply 3 a second predetermined value lower than the value of the energy that three conventional servo-presses may require (approximately, for example, 300% of three conventional presses in this case) is determined, said second predetermined value being able to correspond with the value of the total current It of consumption corresponding to an energy (power) ranging between approximately 150% and approximately 200% of the total energy of the three conventional presses. Thus, in requiring less energy from the main supply 3, the main supply power points necessary for supplying a series of presses 2 with the supply system of the invention requires less power than that used for a series of conventional servo-presses (with the same number of presses as in the system of the invention), maintaining the same flexibility that said servo-presses offer.

## Claims

1. Electrical power supply system for at least one press, the press comprising (2)
a movable slide (20) and a main shaft (21) for transmitting the movement to the slide (20),
and the system comprising
at least one main motor (101) that may be supplied by a general main supply (3) and which may transmit its energy to the main shaft (21) to move the slide (20), and
a power pack (100) comprising an auxiliary motor (10) that may be supplied by the main supply (3), and a flywheel (11) connected to the auxiliary motor (10), so that the auxiliary motor (10) may store its energy in the flywheel (11) in the form of kinetic energy, said kinetic energy being capable of being transmitted to said main shaft (21) to move said slide (20),
**characterised in that**
the pack (100) of the system comprises generator means (12) that may convert the kinetic energy stored in the flywheel (11) into electrical energy, said generator means (12) being capable of supplying said main motor (101) with said electrical energy, so that the main motor (101) is capable of being supplied both by the main supply (3) and the generator means (12), said main motor (101) being connected to the main shaft (21) of the press (2) and said main shaft (21) receiving, therefore, the energy to cause the movement of the slide (20) by means of said main motor (101).

2. System according to the preceding claim, wherein it also comprises switching means (4) disposed between the main motor (101) and, the pack (100) and the main supply (3), said switching means (4) being capable of causing said main motor (101) to be supplied by the pack (100).

3. System according to the preceding claim, wherein it comprises means for determining the current (I) of consumption of the main motor (101), the switching means (4) causing said main motor (101) to be supplied by the pack (100) depending on the value of said current (I).

4. System according to the preceding claim, wherein when it is determined that the current (I) of consumption is equal to or higher than a predetermined value, the switching means (4) are adapted to cause the main motor (101) to be supplied by the main supply (3) and the pack (100) simultaneously or only by said pack (100), causing it to be supplied only by the main supply (3) when the value of said current (I) is lower than said predetermined value.

5. System according to claim 2, wherein the pack (100) is connected to a plurality of presses (2) by means of the switching means (4), each press (2) comprising a main motor (101) connected to the corresponding main shaft (21) and each main motor (101) being connected to said switching means (4), so that by means of said switching means (4) said main motors (101) may be supplied by the pack (100).

6. System according to the preceding claim, wherein it comprises means for determining the total current (It) of consumption of the main motors (101), the switching means (4) being capable of causing said main motors (101) to be supplied by the pack (100) depending on the value of said total current (It).

7. System according to the preceding claim, wherein when it is determined that the total current (It) of consumption is equal to or higher than a predetermined value, the switching means (4) are adapted to cause the main motors (101) to be supplied by the main supply (3) and the pack (100) simultaneously or only by said pack (100), thereby causing them to be supplied only by said main supply (3) when it is determined that the value of said total current (It) is lower than said predetermined value.

8. System according to any of the preceding claims, wherein the generator means (12) comprise a generator that is connected to the flywheel (11).

9. System according to any of claims 1 to 7, wherein the generator means 12 are integrated into the auxiliary motor (10), said auxiliary motor (10) and said generator means (12) being a single element.
